# EUROPEAN PATENT SPECIFICATION

(11) **EP 3 696 644 B1**
(45) Date of publication and mention of the grant of the patent: **08.06.2022**
(21) Application number: 19157432.6
(22) Date of filing: 15.02.2019
(51) Int. Cl.: G05D 23/19, G05D 29/00, B60H 1/00

(54) **A COOLING ARRANGEMENT FOR A MOTOR VEHICLE**
KÜHLANORDNUNG FÜR EIN KRAFTFAHRZEUG
AGENCEMENT DE REFROIDISSEMENT POUR VÉHICULE À MOTEUR

(43) Date of publication of application: 19.08.2020
(73) Proprietor: Veoneer Sweden AB, 447 83 Vårgårda (SE)
(72) Inventor: EKSTRÖM, Håkan, 583 30 Linköping (SE); SAVARINO, Stefano, 583 30 Linköping (SE); AXELSSON, Håkan, 583 30 Linköping (SE)
(74) Representative: Müller Verweyen

(56) References cited:
- JP-A- 2003 326 961
- JP-A- 2009 126 465
- US-A1- 2010 080 399

## Description

The invention relates to a cooling arrangement for cooling an electronic device in the passenger compartment of a motor vehicle, comprising an impeller based electric fan for cooling the electronic device, and an electronic fan controller to control said electric fan.

For existing technology of heat transfer using a cooling device with an impeller-based fan, the noise level from the device may become unacceptable. The noise level from a cooling device with an impeller based fan situated close to a human ear may cause a noise level which is at a noticeable or disturbing level. The acceptable noise level generated from the device depends on the current noise level surrounding the device and the distance between the device and the human. In case of a very low noise level surrounding the device and a short distance between the device and the human the acceptable noise level generated from the device is very low. Acceptable noise level becomes particularly critical in the case of a high-performance camera mounted behind the windscreen of a motor vehicle, due to the relative short distance to the human ear of the driver.

US 2010/0080399 A1 discloses a method for reducing noise in a vehicle by reducing under certain conditions the rotational speed of certain rotational components.

JP 2009 126465 A discloses a cooling system for an electronic control device capable of controlling the rotational speed of a cooling fan. An in-vehicle camera is used to detect occupants in a cabin, wherein the speed of the cooling fan is controlled according to the detection result.

JP 2003 326961 A discloses a cooling fan control device for an on-board electronic instrument. A car speed sensor is used for detecting a car speed, wherein a control device controls a rotational speed of the cooling fan corresponding to the detected car speed.

The problem underlying the present invention is to provide an effective cooling arrangement for cooling an electronic device in the passenger compartment of a motor vehicle without disturbing the driver, co-driver and/or another passenger.

The invention solves this object with the features of the independent claims.

According to the invention, the fan controller has access to noise information correlating with the noise level in the surrounding of the electric fan and to passenger presence information indicating the presence or absence of at least one passenger in the passenger compartment. The fan controller is adapted to control the electric fan on the basis of the noise information and the passenger presence information. In this manner, the fan can be operated at high or full speed if the surrounding noise level in the passenger compartment is so high that the noise generated by the fan is drowned and does not disturb the driver or another passenger. On the other hand, the fan can be operated at medium or low level in case the surrounding noise level in the passenger compartment is so low that the noise generated by the fan would disturb the driver or another passenger if operated at high or full speed. Alternatively or in addition, the fan can be operated at high or full speed if the absence of the driver and/or co-driver and/or another passenger is determined in the vehicle compartment. In this case, no-one is disturbed by a noisy fan. Preferably, the noise information to be used by the fan controller comprises information from a handsfree microphone of the motor vehicle. This is a simple but effective way of determining the surrounding noise level for the fan control. Also, a microphone for handsfree communication is provided in many modern motor vehicles anyway, in which case no additional parts are needed to perform the advantageous fan control.

Preferably, the noise information to be used by the fan controller comprises compartment airflow information from an air conditioning, air heating and/or air blowing system of the motor vehicle. If the compartment airflow is determined to be high, the corresponding noise drowns the noise generated by the fan, which consequently can be operated at high or full speed. On the other hand, if the compartment airflow is determined to be low, the fan should be operated at medium or low speed or even turned off, in order not to disturb anyone.

Preferably, the passenger presence information comprises information from a seat occupancy sensor. This is a simple but effective way of determining the presence or absence of a relevant passenger (driver and/or co-driver and/or other passenger) in the motor vehicle. Also, one or more seat occupancy sensors are provided in many modern motor vehicles anyway, in which case no additional parts are needed to perform the advantageous fan control.

In a particularly preferred application of the invention, the electronic device to be cooled is a camera for inspecting a vehicle environment, which is often installed behind the windscreen of the motor vehicle, due to the short distance to the driver's or co-driver's ear.

Preferably, the cooling arrangement comprises a temperature sensor arranged to sense a temperature of said electronic device, wherein the fan controller is adapted to control the electric fan on the basis of said measured temperature. In this manner, overheating of the electronic device can be prevented in a simple and reliable manner.

In preferred embodiments of the invention, the fan controller is adapted to take into account, in the control of the electric fan, one or more parameters from the group of engine on or off; vehicle standstill or moving; vehicle speed. The above mentioned parameters correlate to the surrounding noise level in some way or other, such that taking one or more of these parameters into account can further improve the fan control.

Preferably the fan control comprises a loop where the fan is operated until a measured temperature falls below a predetermined threshold. This form of temperature regulation is particularly simple and effective.

In preferred embodiments, the fan controller is adapted to determine one or more vehicle statuses from the group of abandoned vehicle; standstill with engine off; standstill with engine on; driving; and to perform the control of the fan depending on the determined vehicle status. The above mentioned vehicle statuses correlate to the surrounding noise level in some way or other, such that taking one or more of these vehicle statuses into account can further improve the fan control.

Preferably, in a "standstill with engine off", "standstill with engine on" and/or "driving" vehicle status, the fan is operated at different impeller speed levels depending on the determined compartment air flow relative to at least one predetermined flow threshold. In particular, the fan can be operated at higher impeller speed with increasing compartment air flow, drowning the noise from the fan.

After all, an important feature of the invention is that the noise level surrounding the cooling device, with a impeller based fan, is advantageously considered when regulating the fan and thereby the noise level the cooling device or fan generates. A method with one or more of the following steps is included in preferred embodiments of the invention: 1) The noise level surrounding the device can be directly monitored and measured. 2) The relevant measurable entities can be used to indirectly estimate the noise level surrounding the device are received by the device. 3) The noise level surrounding the device can indirectly estimated from the received measurable entities made available to the device in step 2. 4) The monitored and estimated noise level can be used as an input to an algorithm regulating the fan in the device. 5) The algorithm regulating the fan allows a noise level generated from the fan which is related to the surrounding noise levels received in step 3, but with a hysteresis to avoid false action from temporary noise peak in the surrounding noise levels. 6) Preferably it can be possible to adjust the hysteresis and the relation between surrounding noise level and allowed noise level generated from the fan, in order to find an acceptable noise level for a human in each specific use case.

In addition, the acceptable noise level for a human depends on the distance between the device generating the noise and the human. Therefore, preferred aspects of the invention include considerations whether the human is close to the device or whether the human is not within hearing distance of the device. As described above, this could be done by determining whether the human is inside the vehicle, where the device is located, or not. The acceptable noise level generated by the cooling device is much higher when there is no human within hearing distance of the device. This information can be used in addition to the noise level surrounding the device when regulating the fan in above step 5.

The monitored and measured noise level in step 1 above could be done with a noise level sensor, and directly reported to the cooling device or fan controller. The estimated noise level in step 3 above could be derived from measurable entities such as whether the vehicle engine is on or off, the speed of the vehicle and/or the compartment air flow intensity from an air conditioning system inside the vehicle.

Whether a human is within hearing distance to the device or not can preferably be determined by identifying any human presence or absence in the seats of the vehicle, in particular by one or more seat occupancy sensors. According to the invention, fan control takes into account whether the door of the vehicle is or has been opened since the unlock of the vehicle to determine a human inside the vehicle.

Summarizing the above, noise level estimation and/or measurement is performed in a preferred embodiment of the invention. Consideration of human presence or absence is part of the invention.

In a further embodiment, noise level estimation and/or measurement and human presence or absence determination are combined.

Advantages of the invention compared to a known solution (regulating the fan without knowledge of noise level nor human presence/absence in the vehicle) is that the noise level the cooling device generates is perceived as much lower with the invention. In an ideal realization of the invention the noise level generated from the cooling device with the impeller-based fan is never recognized by a human.

In the following the invention shall be illustrated on the basis of preferred embodiments with reference to the accompanying drawings, wherein:
- Fig. 1: shows a schematic view of a cooling arrangement for a motor vehicle;
- Fig. 2: shows a flow diagram of a system startup and/or shut-down sequence for an "abandoned vehicle" status; and
- Fig. 3: shows a flow diagram of a control method for a "standstill with engine off", "standstill with engine on" and/or driving" vehicle status.

The cooling arrangement 10 comprises a camera unit 23 adapted to be mounted behind a windscreen 21 of a motor vehicle, i.e. in the passenger compartment 24 of the motor vehicle 1. The camera unit 23 comprises a housing 25 adapted to be mounted behind a windscreen 21 of a motor vehicle, and at least one camera 12 arranged to view through a front opening of the housing 25 and through the windscreen 21 into the surrounding in front of the motor vehicle. Images captured by the camera 12 are processed by a digital processing device in an electronic control unit (ECU) 26 in order to detect obstacles in front of the motor vehicle, and to control a driver assistance device, like a collision avoidance system, depending on said image processing.

An impeller based fan 13 is provided in the camera unit 23, i.e. within the housing 25, in order to cool the camera 12 and to avoid overheating. The housing 25 preferably comprises openings 27, 28, in particular an inlet opening 27 for letting in cool air from the passenger compartment 24 into the camera unit 23 and an outlet opening 28 for letting out warm air from inside the camera unit 23 into the passenger compartment 24.

The fan speed of the fan 13 is controlled and/or regulated by a digital fan controller 15 depending on one or more measured values or parameters like noise level in the passenger compartment 24, presence or absence 22 of passengers in the passenger compartment 24, camera temperature, etc., which will be explained below in detail. The fan controller 15 may be comprised in the same ECU 26 as the digital processor processing images from the camera 12, or in a separate ECU, or a processing device provided in the camera unit 23.

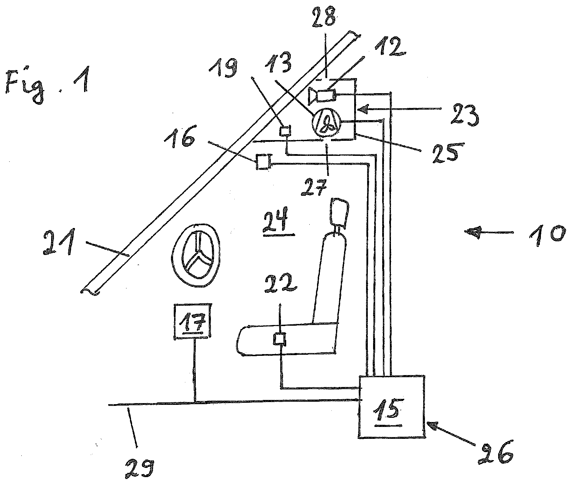

The fan speed of the fan 13 is preferably controlled and/or regulated by the fan controller 15 on the basis of a temperature of the camera 12, or more generally a temperature related to the camera 12 or a temperature within the camera unit 23, as measured by a temperature sensor 16 arranged inside the camera unit 23. In some embodiments, the temperature sensor 16 may be arranged inside the camera (unlike shown in Figure 1). For example, the temperature sensor 16 may be arranged to measure the PCB temperature, i.e. the temperature of a printed circuit board in the camera 12.

In particular, one or more pre-defined temperature thresholds may preferably stored in the fan controller 15, where the fan speed may be increased if the measured temperature (the temperature measured by the temperature sensor 16) exceeds a pre-defined threshold (depending also on other conditions, as will be explained below). Furthermore, one or more pre-defined temperature thresholds may preferably stored in the fan controller 15, where the fan speed may be decreased if the measured temperature (the temperature measured by the temperature sensor 16) falls below one of these pre-defined thresholds (depending also on other conditions).

According to one aspect of the invention, the fan speed of the fan 13 is preferably controlled and/or regulated by the fan controller 15 on the basis of information correlating with the noise level in the passenger compartment 24. The noise level in the passenger compartment 24 may preferably be measured by a microphone 16. In such case, the signal by the microphone 16 provides information correlating with the noise level in the passenger compartment 24. The microphone 16 may be a microphone of a handsfree communication system known per se in the art. Alternatively, the microphone 16 may be a separate microphone, in particular a dedicated microphone of the cooling arrangement 10.

Alternative and/or additional sources may be used for obtaining information correlating with the noise level in the passenger compartment 24. For example, information from an air conditioner 17, or air heater or air blower, for blowing air, in particular heated or cooled air into the passenger compartment 24, may be transmitted to the fan controller 15 via, for example, a data bus 29 (like CAN bus) of the motor vehicle. This may in particular comprise information whether the blower of the air conditioner 17 is on or off, and/or the speed or adjusted level of the blower of the air conditioner 17. This is because the blower of the air conditioner 17, when in operation, causes noise in the passenger compartment 24.

Other parameters used by the fan controller 15 for fan control can comprise the vehicle speed, where the noise level in the passenger compartment 24 usually increases with increasing vehicle speed; the status of the vehicle (standing or moving); the status of the vehicle engine (on or off); the status of the passenger doors of the vehicle (open or closed). These parameters may be transmitted to the fan controller via the data bus 29.

According to one aspect of the invention, the fan speed of the fan 13 is preferably controlled and/or regulated by the fan controller 15 on the basis of the presence or absence of at least one passenger, for example the driver, in the passenger compartment 24. The presence or absence of the driver, or any other passenger, in the passenger compartment 24 is preferably determined on the basis of a signal from a seat occupancy sensor 22. In addition or alternatively, the presence or absence of a passenger in the passenger compartment 24 may be determined by other means, for example a driver monitoring camera and/or a motion sensor adapted to detect motion of a person in the passenger compartment 24.

In general, if no passenger presence is determined in the passenger compartment 24, or if the absence of the driver and/or co-driver is determined, the fan speed, i.e. the rotation speed of the fan 13, can be controlled or regulated independently of the noise level in the passenger compartment 24. For example, the fan speed, i.e. the rotation speed of the fan 13, can be set to maximum by the fan controller 15 if the measured temperature is above a predetermined threshold, because in this case, no passenger in the passenger compartment 24 is disturbed by the noise generated by the rotating fan 13.

On the other hand, if the presence of one or more passengers, for example the driver and/or co-driver, is determined in the passenger compartment 24, the fan speed is advantageously controlled or regulated depending on the noise level in the passenger compartment 24, as determined for example by the microphone 16. For example, if the presence of the driver and/or the co-driver in the passenger compartment 24 is determined, for example on the basis of the seat occupancy sensor 22, the speed of fan 13 is advantageously kept low if low noise level is determined in the passenger compartment 24, and can be raised in the case a higher noise level is determined in the passenger compartment 24. In general, the fan speed may be set to several discrete levels related to corresponding noise and/or temperature thresholds, or the fan speed may be a continuous or quasi-continuous monotonic function of the noise level in the passenger compartment 24 and/or the temperature level of the camera 12.

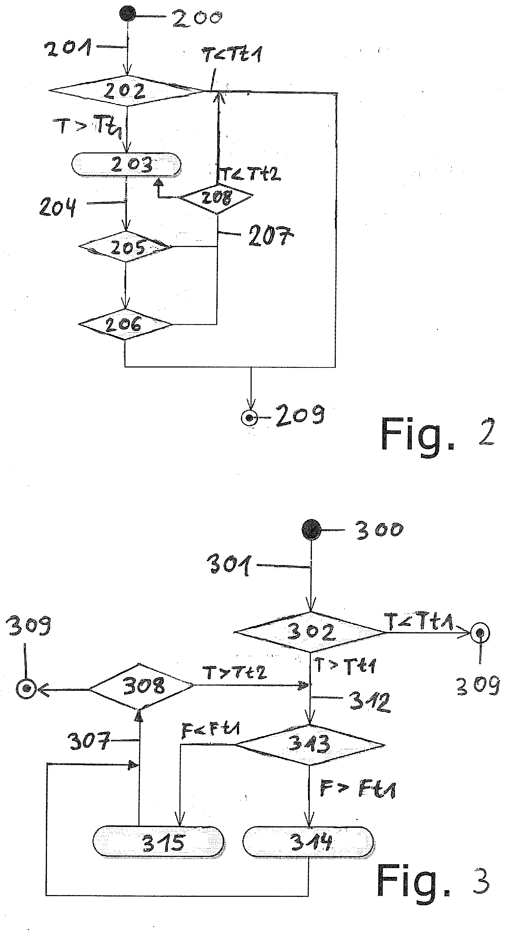

Details of the fan control of the electric fan 13 depending on the temperature of the camera 12, the presence or absence of one or more passengers in the passenger compartment 24, the noise level in the passenger compartment 24 and/or other parameters will be described in the following with reference to Figures 2 and 3.

With respect to the embodiment of Figures 2 and 3, the fan controller 15 is preferably adapted to determine different vehicle statuses with respect to Other parameters used by the fan controller 15 for fan control the status of the vehicle (standing or moving), the status of the vehicle engine (on or off) and the status of the passenger doors of the vehicle (open or closed).

Figure 2 relates to a vehicle status denoted as "abandoned vehicle". In this status, the engine is off, the driver and/or co-driver, or all passengers, have left the vehicle and all passenger doors are closed, possibly locked. This state also covers situations where the vehicle prepares to be entered, or has just been left (vehicle bus on, camera started or still running).

Starting from a situation 200 where the fan 13 is off, the temperature of the camera 12, for example the PCB temperature, as measured by temperature sensor 19 is checked in step 201. In step 202, the measured temperature T is compared to a pre-defined threshold Tt1 permanently stored for example in the fan controller 15. If the measured temperature T is above the threshold Tt1, the fan controller 15 controls the fan 13 to run at full speed in step 203, in order to cool the camera 12, which does not disturb anyone because no passenger is in the vehicle.

During the fan 13 running at full speed, the vehicle door status may be checked by the fan controller 15 in step 204. In case all vehicle doors are closed, the fan controller 15 continues to step 207 which will be explained later.

If a vehicle door (one or more of the driver door, the co-driver door and/or any other passenger door) is open, the presence of at least one passenger (one or more of the driver, the co-driver and/or another passenger) is determined in step 206, for example on the basis of a signal from one or more seat occupancy sensor 22. If the passenger presence detection is negative, the fan controller 15 continues to step 207 which will be explained later. If, however, the passenger presence detection is positive, the fan 13 is controlled in step 209 such that the noise caused by the fan 13 does not exceed an acceptable noise level, and preferably does not cause noticeable noise, in step 209. In particular, the fan 13 may be shut off in step 209. Alternatively, the fan 13 may continue to operate at low or medium speed, i.e. at well below maximum speed, preferably below 50% maximum speed. In this manner, it can be ensured that the passenger which has entered the car is not disturbed by noise caused by the fan 13.

If either the door open status has been determined negative in step 205, or the passenger presence status in the passenger compartment has been determined negative in step 206, the temperature as measured by temperature sensor 19 is again checked in step 207, and the thus measured temperature T is compared to a predefined threshold Tt2 permanently stored for example in the fan controller 15 in step 208. The threshold temperature Tt2 may be equal to the temperature Tt1, but is preferably at least several °C below the temperature Tt1 in order to introduce a hysteresis.

If the measured temperature T is above the threshold Tt2, the fan 13 continues to run at full speed (step 203), in order to further cool the camera 12. This loop continues until the current measured temperature T falls below the threshold T2 (provided door status and seat occupancy status remain unchanged) and further cooling of the camera 12 is not necessary, at least not at full fan speed. In this case, operation can proceed to step 209, in particular the fan 13 may be shut off in step 209.

In the above-described cooling loop, the step 205 of checking the vehicle door status is optional.

It should be noted that, when the vehicle is abandoned, the activity shown in Figure 2 shall only be run until the vision system and/or cooling arrangement is shut down, to save the vehicle battery from being exhausted. The vision system and/or cooling arrangement is powered up and/or shut down by the start key and/or by a corresponding signal on the vehicle bus, e.g. triggered by when the driver approaches the car.

Figure 3 relates to a vehicle status denoted as "standstill with engine off". In this status, the vehicle engine is off and the vehicle is standing still. The presence of at least one passenger, like the driver and/or co-driver is determined, for example on the basis of a signal from one or more seat occupancy sensors 22. This state also covers situations where the vehicle has just been entered, or the engine has just been turned off (camera started, driver seated).

The vehicle status changes from "abandoned vehicle" to "standstill with engine off", and vice versa, by the driver and/or c-driver, and/or another passenger, entering or leaving the vehicle, respectively, as determined for example by a seat occupation sensor 22.

In Figure 3, corresponding reference numbers are by 100 higher than those of Figure 2.

Starting from a situation 300 where the fan 13 is off, the temperature of the camera 12, for example the PCB temperature, as measured by temperature sensor 19 is checked in step 301. In step 302, the measured temperature T is compared to a pre-defined threshold Tt1 permanently stored for example in the fan controller 15. The threshold temperature Tt1 may be the same as, or different from, the threshold temperature Tt1 of Figure 2. If the measured temperature T is below the threshold Tt1, the fan 13 is shut off in step 209 because there is no need for cooling the camera 12.

If the measured temperature T is above the threshold Tt1, the compartment airflow F is determined in step 312. The compartment airflow is the airflow generated by the blower of air conditioner 17 or any other air heating or air blowing device in the motor vehicle, and may for example adjustable by the driver, or automatically regulated. In step 313, the magnitude of the compartment airflow F is evaluated. For example, the compartment airflow may be evaluated as being ON or OFF. More generally, the compartment airflow F may be evaluated as being greater than or equal (≥) or below (<) a predetermined blowing level Ft1.

In case the current compartment airflow F is ON, or greater than or equal (≥) the predetermined blowing level Ft1, the fan controller 15 controls the fan 13 to blow at a medium speed in step 314, which provides cooling to the camera 12 but does not cause noticeable or disturbing noise for the driver and/or co-driver, because the noise from the blower of the air conditioner 17 predominates.

In case the current compartment airflow F is OFF, or below (<) the predetermined blowing level Ft1, the fan controller 15 controls the fan 13 to blow at a low speed in step 313 (where low speed < medium speed < full speed), which still provides cooling to the camera 12 but does not cause noticeable or disturbing noise for the driver and/or co-driver, even though there is no or little noise from the blower of the air conditioner 17.

The example of Figure 3 may be readily generalized to more than two speed levels of the fan 13 corresponding to more that one levels of current compartment airflow F.

Proceeding from the operation of the fan 13 in steps 314, 315, ..., the current temperature as measured by temperature sensor 19 is again checked in step 307, and the thus measured temperature T is compared to a predefined threshold Tt2 permanently stored for example in the fan controller 15 in step 308. The threshold temperature Tt2 may be equal to the temperature Tt1, but is preferably at least several °C below the temperature Tt1 in order to introduce a hysteresis. Furthermore, the threshold temperature Tt2 may be the same as, or different from, the threshold temperature Tt2 of Figure 2.

If the measured current temperature T is above the threshold Tt2, operation proceeds to step 313 and further to any one of steps 314, 315, ... in order to further cool the camera 12. This loop continues until the current measured temperature T falls below the threshold T2 and further cooling of the camera 12 is not necessary. In this case, operation proceeds from step 308 to step 309, where in particular the fan 13 may be shut off.

The fan controller 15 is preferably adapted to determine a vehicle status denoted as "standstill with engine on". This status differs from the status "standstill with engine off" in that the vehicle engine is running, but the vehicle is standing still, i.e., the vehicle speed is still zero. The vehicle status changes from "standstill with engine off" to "standstill with engine on", and vice versa, by turning on or off the vehicle engine, respectively. Both the engine speed and the vehicle speed can be available to the fan controller 15 via the vehicle data bus 29.

The control of the fan 13 by the fan controller 15 in the status "standstill with engine on" can be essentially the same as that in Figure 3. However, the speed level of the fan operation in step 314 and/or in step 315 can be different from, in particular be higher than, the corresponding speed level(s) in the "standstill with engine off" status. In particular, the speed level of the fan operation in step 314 and/or in step 315 can depend on the engine status (on/off) and/or on the engine speed. More specifically, the speed level of the fan operation in step 314 and/or in step 315 can increase with higher engine speed, and/or decrease with lower engine speed. The temperature thresholds Tt1 and/or T2 can be the same as in Figure 3, or different if appropriate.

The fan controller 15 is preferably adapted to determine a vehicle status denoted as "driving". This status differs from the status "standstill with engine on" in that the vehicle speed is larger than zero. The vehicle status changes from "standstill with engine on" to "driving", and vice versa, by the vehicle staring to move or halting, respectively. The vehicle speed can be available to the fan controller 15 via the vehicle data bus 29.

The control of the fan 13 by the fan controller 15 in the status "driving" can be essentially the same as that for the status "Standstill with engine on". However, the speed level of the fan operation in step 314 and/or in step 315 can be different from, in particular be higher than, the corresponding rotation level(s) in the "standstill with engine on" status. In particular, the speed level of the fan operation in step 314 and/or in step 315 can depend on the vehicle speed. More specifically, the speed level of the fan operation in step 314 and/or in step 315 can increase with higher vehicle speed and/or decrease with lower vehicle speed. The temperature thresholds Tt1 and/or T2 can be the same as in Figure 3, or different if appropriate.

## Claims

1. A cooling arrangement (10) for cooling an electronic device (12) in the passenger compartment of a motor vehicle (1), comprising an impeller based electric fan (13) for cooling the electronic device (12), and an electronic fan controller (15) to control said electric fan (15),
wherein said fan controller (15) has access to noise information correlating with the noise level in the surrounding of the electric fan (13) , wherein said fan controller (15) is adapted to control said electric fan (13) on the basis of said noise information , **characterised in that** said fan controller has further access to passenger presence information indicating the presence or absence of at least one passenger in the passenger compartment, wherein said fan controller is further adapted to control said electric fan on the basis of said passenger presence information, wherein said fan controller (15) is adapted to take into account, in said control of said electric fan (13), the parameter:
- one or more vehicle doors open or closed,
wherein fan control by said fan controller (15) takes into account whether the door of the vehicle is or has been opened since an unlock of the vehicle to determine a human inside the vehicle.

2. The cooling arrangement as claimed in claim 1, **characterized in that** said noise information comprises information from a handsfree microphone (16) of the motor vehicle.

3. The cooling arrangement as claimed in any one of the preceding claims, **characterized in that** said noise information comprises compartment airflow information from an air conditioning, air heating and/or air blowing system (18) of the motor vehicle.

4. The cooling arrangement as claimed in any one of the preceding claims, **characterized in that** said passenger presence information comprises information from a seat occupancy sensor (22).

5. The cooling arrangement as claimed in any one of the preceding claims, **characterized in that** said electronic device (12) is a camera for inspecting a vehicle environment.

6. The cooling arrangement as claimed in any one of the preceding claims, **characterized in that** said cooling arrangement comprises a housing (20), wherein said electronic fan (13) and said electronic device (12) are arranged in said housing (20).

7. The cooling arrangement as claimed in claim 6, **characterized in that** said housing (20) is arranged for being mounted behind the windscreen (21) of a motor vehicle.

8. The cooling arrangement as claimed in any one of the preceding claims, **characterized in that** it comprises a temperature sensor (19) arranged to sense a temperature of said electronic device (12), wherein said fan controller (15) is adapted to control said electric fan (13) on the basis of said measured temperature.

9. The cooling arrangement as claimed in any one of the preceding claims, **characterized in that** said fan controller (15) is adapted to take into account, in said control of said electric fan (13), one or more parameters from the group of:
- engine on or off;
- vehicle standstill or moving;
- vehicle speed.

10. The cooling arrangement as claimed in any one of the preceding claims, **characterized in that** the fan control comprises a loop (202-208; 307, 308, 312-315) where the fan (15) is operated until a measured temperature T falls below a predetermined threshold Tt2.

11. The cooling arrangement as claimed in any one of the preceding claims, **characterized in that** said fan controller (15) is adapted to determine one or more vehicle statuses from the group of:
- abandoned vehicle;
- standstill with engine off;
- standstill with engine on;
- driving
and to perform the control of the fan (13) depending on the determined vehicle status.

12. The cooling arrangement as claimed in claim 11, wherein in a "standstill with engine off", "standstill with engine on" and/or "driving" vehicle status, the fan (15) is operated at different impeller speed levels (314, 315) depending on the determined compartment air flow F relative to at least one predetermined flow threshold Ft1.

13. The cooling arrangement as claimed in claim 12, wherein the fan (15) is operated at higher impeller speed (314) with increasing compartment air flow F.

## Patentansprüche

1. Eine Kühlanordnung (10) zum Kühlen einer elektronischen Vorrichtung (12) in dem Fahrgastraum eines Kraftfahrzeugs (1), wobei die Kühlanordnung einen elektrischen Lüfter (13) auf der Grundlage eines Laufrads zum Kühlen der elektronischen Vorrichtung (12) und eine elektronische Lüftersteuereinheit (15) zum Steuern des elektrischen Lüfters (15) umfasst, wobei die Lüftersteuereinheit (15) Zugriff auf Geräuschinformationen hat, die mit dem Geräuschpegel in der Umgebung des elektrischen Lüfters (13) korrelieren, wobei die Lüftersteuereinheit (15) dafür ausgelegt ist, den elektrischen Lüfter (13) auf der Grundlage der Geräuschinformationen zu steuern, **dadurch gekennzeichnet, dass** die Lüftersteuereinheit ferner Zugriff auf Insassenanwesenheitsinformationen hat, die die Anwesenheit oder Abwesenheit wenigstens eines Insassen in dem Fahrgastraum angeben, wobei die Lüftersteuereinheit ferner dafür ausgelegt ist, den elektrischen Lüfter auf der Grundlage der Insassenanwesenheitsinformationen zu steuern, wobei die Lüftersteuereinheit (15) dafür ausgelegt ist, bei der Steuerung des elektrischen Lüfters (13) den folgenden Parameter zu berücksichtigen:
- eine oder mehrere Fahrzeugtüren sind geöffnet oder geschlossen,
wobei die Lüftersteuerung durch die Lüftersteuereinheit (15) berücksichtigt, ob die Tür des Fahrzeugs seit einer Entriegelung des Fahrzeugs geöffnet ist oder geöffnet worden ist, um einen Menschen innerhalb des Fahrzeugs zu bestimmen.

2. Die Kühlanordnung nach Anspruch 1, **dadurch gekennzeichnet, dass** die Geräuschinformationen Informationen von einem Freisprechmikrofon (16) des Kraftfahrzeugs umfassen.

3. Die Kühlanordnung nach einem der vorhergehenden Ansprüche, **dadurch gekennzeichnet, dass** die Geräuschinformationen Fahrgastraum-Luftströmungsinformationen von einer Klimaanlage, von der Luftheizung und/oder von einem Luftgebläsesystem (18) des Kraftfahrzeugs umfassen.

4. Die Kühlanordnung nach einem der vorhergehenden Ansprüche, **dadurch gekennzeichnet, dass** die Insassenanwesenheitsinformationen Informationen von einem Sitzbelegungssensor (22) umfassen.

5. Die Kühlanordnung nach einem der vorhergehenden Ansprüche, **dadurch gekennzeichnet, dass** die elektronische Vorrichtung (12) eine Kamera zum Untersuchen einer Fahrzeugumgebung ist.

6. Die Kühlanordnung nach einem der vorhergehenden Ansprüche, **dadurch gekennzeichnet, dass** die Kühlanordnung ein Gehäuse (20) umfasst, wobei der elektrische Lüfter (13) und die elektronische Vorrichtung (12) in dem Gehäuse (20) angeordnet sind.

7. Die Kühlanordnung nach Anspruch 6, **dadurch gekennzeichnet, dass** das Gehäuse (20) dafür ausgelegt ist, hinter der Windschutzscheibe (21) eines Kraftfahrzeugs montiert zu werden.

8. Die Kühlanordnung nach einem der vorhergehenden Ansprüche, **dadurch gekennzeichnet, dass** sie einen Temperatursensor (19) umfasst, der dafür ausgelegt ist, eine Temperatur der elektronischen Vorrichtung (12) zu erfassen, wobei die Lüftersteuereinheit (15) dafür ausgelegt ist, den elektrischen Lüfter (13) auf der Grundlage der gemessenen Temperatur zu steuern.

9. Die Kühlanordnung nach einem der vorhergehenden Ansprüche, **dadurch gekennzeichnet, dass** die Lüftersteuereinheit (15) dafür ausgelegt ist, bei der Steuerung des elektrischen Lüfters (13) einen oder mehrere Parameter aus der folgenden Gruppe zu berücksichtigen:
- die Kraftmaschine ist ein- oder ausgeschaltet;
- das Fahrzeug steht still oder bewegt sich;
- die Fahrzeuggeschwindigkeit.

10. Die Kühlanordnung nach einem der vorhergehenden Ansprüche, **dadurch gekennzeichnet, dass** die Lüftersteuerung eine Schleife (202-208; 307, 308, 312-315) umfasst, wobei der Lüfter (15) betrieben wird, bis eine gemessene Temperatur T unter einen vorgegebenen Schwellenwert Tt2 gefallen ist.

11. Die Kühlanordnung nach einem der vorhergehenden Ansprüche, **dadurch gekennzeichnet, dass** die Lüftersteuereinheit (15) dafür ausgelegt ist, einen oder mehrere Fahrzeugstatus aus der folgenden Gruppe zu bestimmen:
- Verlassenes Fahrzeug;
- Stillstand mit ausgeschalteter Kraftmaschine;
- Stillstand mit eingeschalteter Kraftmaschine;
- Fahren
und die Steuerung des Lüfters (13) in Abhängigkeit von dem bestimmten Fahrzeugstatus auszuführen.

12. Die Kühlanordnung nach Anspruch 11, wobei der Lüfter (15) in einem Fahrzeugstatus "Stillstand mit ausgeschalteter Kraftmaschine", "Stillstand mit eingeschalteter Kraftmaschine" und/oder "Fahren" in Abhängigkeit von der bestimmten Fahrgastraumluftströmung F relativ zu wenigstens einem vorgegebenen Strömungsschwellenwert Ft1 mit verschiedenen Laufraddrehzahlniveaus (314, 315) betrieben wird.

13. Die Kühlanordnung nach Anspruch 12, wobei der Lüfter (15) mit zunehmender Fahrgastraumluftströmung F mit höherer Laufraddrehzahl (314) betrieben wird.

## Revendications

1. Un agencement de refroidissement (10) pour refroidir un dispositif électronique (12) dans l'habitacle passager d'un véhicule à moteur (1), comprenant un ventilateur électrique à turbine (13) pour refroidir le dispositif électronique (12), et un dispositif de commande de ventilateur électronique (15) pour commander ledit ventilateur électrique (15),
dans lequel, ledit dispositif de commande de ventilateur (15) a accès à des informations de bruit en corrélation avec le niveau de bruit dans l'entourage du ventilateur électrique (13), dans lequel ledit dispositif de commande de ventilateur (15) est adapté pour commander ledit ventilateur électrique (13) sur la base desdites informations de bruit, **caractérisé en ce que** ledit dispositif de commande de ventilateur a en outre accès à des informations de présence de passager indiquant la présence ou l'absence d'au moins un passager dans l'habitacle passager, dans lequel ledit dispositif de commande de ventilateur est en outre adapté pour commander ledit ventilateur électrique sur la base desdites informations de présence de passager, dans lequel ledit dispositif de commande de ventilateur (15) est adapté pour prendre en compte, dans ladite commande dudit ventilateur électrique (13), le paramètre :
- une ou plusieurs portières de véhicule ouvertes ou fermées,
dans lequel la commande de ventilateur par ledit dispositif de commande de ventilateur (15) prend en compte le fait que la portière du véhicule est ou a été ouverte ou non depuis un verrouillage du véhicule pour déterminer une présence humaine à l'intérieur du véhicule.

2. L'agencement de refroidissement selon la revendication 1, **caractérisé en ce que** lesdites informations de bruit comprennent des informations provenant d'un microphone mains libres (16) du véhicule à moteur.

3. L'agencement de refroidissement selon l'une quelconque des revendications précédentes, **caractérisé en ce que** lesdites informations de bruit comprennent des informations de flux d'air d'habitacle provenant d'un système de climatisation, de chauffage et/ou de soufflage d'air (18) du véhicule à moteur.

4. L'agencement de refroidissement selon l'une quelconque des revendications précédentes, **caractérisé en ce que** lesdites informations de présence de passager comprennent des informations provenant d'un capteur d'occupation de siège (22).

5. L'agencement de refroidissement selon l'une quelconque des revendications précédentes, **caractérisé en ce que** ledit dispositif électronique (12) est une caméra pour examiner un environnement de véhicule.

6. L'agencement de refroidissement selon l'une quelconque des revendications précédentes, **caractérisé en ce que** ledit agencement de refroidissement comprend un boîtier (20), dans lequel ledit ventilateur électronique (13) et ledit dispositif électronique (12) sont agencés dans ledit boîtier (20).

7. L'agencement de refroidissement selon la revendication 6, **caractérisé en ce que** ledit boîtier (20) est agencé pour être monté derrière le pare-brise (21) d'un véhicule à moteur.

8. L'agencement de refroidissement selon l'une quelconque des revendications précédentes, **caractérisé en ce qu'**il comprend un capteur de température (19) agencé pour capter une température dudit dispositif électronique (12), dans lequel ledit dispositif de commande de ventilateur (15) est adapté pour commander ledit ventilateur électrique (13) sur la base de ladite température mesurée.

9. L'agencement de refroidissement selon l'une quelconque des revendications précédentes, **caractérisé en ce que** ledit dispositif de commande de ventilateur (15) est adapté pour prendre en compte, dans ladite commande dudit ventilateur électrique (13), un ou plusieurs paramètres du groupe d'éléments suivants :
- moteur en marche ou à l'arrêt;
- véhicule immobile ou se déplaçant ;
- vitesse de véhicule.

10. L'agencement de refroidissement selon l'une quelconque des revendications précédentes, **caractérisé en ce que** la commande de ventilateur comprend une boucle (202 à 208 ; 307, 308, 312 à 315) où le ventilateur (15) est mis en fonctionnement jusqu'à ce qu'une température mesurée T chute en dessous d'un seuil prédéterminé Tt2.

11. L'agencement de refroidissement selon l'une quelconque des revendications précédentes, **caractérisé en ce que** ledit dispositif de commande de ventilateur (15) est adapté pour déterminer un ou plusieurs statuts de véhicule du groupe d'éléments suivants :
- véhicule abandonné ;
- immobile avec le moteur à l'arrêt ;
- immobile avec le moteur en marche ;
- en route
et pour réaliser la commande du ventilateur (13) en fonction du statut de véhicule déterminé.

12. L'agencement de refroidissement selon la revendication 11, dans lequel, dans un statut de véhicule « immobile avec le moteur à l'arrêt », « immobile avec le moteur en marche » et/ou « en route », le ventilateur (15) est mis en fonctionnement à différents niveaux de vitesse de turbine (314, 315) en fonction du flux d'air d'habitacle F déterminé par rapport à au moins un seuil de flux Ft1 prédéterminé.

13. L'agencement de refroidissement selon la revendication 12, dans lequel le ventilateur (15) est mis en fonctionnement à une vitesse de turbine (314) plus élevée lorsque le flux d'air d'habitacle F augmente.
